# EUROPÄISCHE PATENTSCHRIFT

(11) **EP 3 155 472 B1**
(45) Veröffentlichungstag und Bekanntmachung des Hinweises auf die Patenterteilung: **16.05.2018**
(21) Anmeldenummer: 15738827.3
(22) Anmeldetag: 03.06.2015
(51) Int. Cl.: G02C 1/02, G02C 11/00

(54) **RAHMENLOSE SCHUTZBRILLE MIT KORRIGIERENDEN BRILLENGLÄSERN UND SEITENSCHUTZTEILEN**
FRAMELESS SAFETY EYEGLASSES HAVING CORRECTIVE EYEGLASS LENSES AND LATERAL PROTECTIVE PARTS
LUNETTES DE PROTECTION SANS MONTURE MUNIES DE VERRES CORRECTEURS ET D'ÉLÉMENTS DE PROTECTION LATÉRAUX

(30) Priorität: 10.06.2014 DE 202014102682 U
(43) Veröffentlichungstag der Anmeldung: 19.04.2017
(73) Patentinhaber: Bergner, Walter, 55543 Bad Kreuznach (DE)
(72) Erfinder: Bergner, Walter, 55543 Bad Kreuznach (DE)
(74) Vertreter: Mackert, Andreas
(86) Internationale Anmeldenummer: PCT/DE2015/100220
(87) Internationale Veröffentlichungsnummer: WO 2015/188807

(56) Entgegenhaltungen:
- WO-A1-2010/055732
- US-A- 1 323 805
- US-A- 2 840 821
- US-A- 3 577 566

## Beschreibung

Die Erfindung betrifft eine Schutzbrille, insbesondere Arbeitsschutzbrille oder Sportschutzbrille, mit korrigierenden Brillenschutzgläsern zum Ausgleich von Fehlsichtigkeit gemäß dem Oberbegriff des Anspruchs 1.

Im Stand der Technik sind zum einen Schutzbrillen bekannt, die in der Regel Fassungen aus Kunststoff oder Metall aufweisen, in die korrigierende Brillengläser oder Schutzgläser eingesetzt sind. Diese sind mittig durch eine Nasenbrücke verbunden. Die Brillenbügel sind temporal fest oder durch Scharniere mit dem Brillengestell verbunden und bewirken auf diese Weise den sicheren Sitz am Kopf des Brillenträgers.

Zudem ist bekannt, temporal an einer Schutzbrille Seitenschutzteile anzuordnen, die die Augen des Brillenträgers davor schützen sollen, dass Fremdkörper seitlich in den Augenraum eindringen können und hier Verletzungen verursachen. Insbesondere bei Tätigkeiten an Maschinen, bei denen Späne und Ähnliches umherfliegen, sind derartige Schutzbrillen verpflichtend von den Arbeitnehmern zu tragen. Derartige Seitenschutzteile sind hierbei entweder fest mit dem Brillengehäuse temporal verbunden oder fest an den Brillenbügeln seitlich angeordnet, wobei Sie in diesem Fall durch Aufklappen der Bügel in die seitliche Schutzposition gebracht werden.

Als Beispiele für den Stand der Technik von rahmenlosen Schutzbrillen sind die Druckschriften US 4,670,915 sowie US 5,032,017 bekannt, in denen Anordnungen offenbart sind, bei denen die Brillengläser entweder einteilig ausgebildet sind oder über eine Brücke verbunden werden, wobei temporal Brillenbügel an den Brillengläsern direkt angebracht sind. In den genannten Druckschriften liegt hierbei der technische Nutzen darin, dass die Brillenbügel lösbar an den Brillengläsern befestigt sind, so dass eine Umgestaltung dieser Brillen durch entsprechende Montage ohne weiteres möglich ist.

Auch die Anordnung von Seitenschutzteilen an herkömmlichen Brillen mit Gestellen ist im Stand der Technik hinlänglich offenbart. Die Druckschriften US 2 840 821 A, US 3 577 566 A, US 5 793 463 A, US 2003 / 0 218 716 A1, US 2010 / 0 296 046 A1 sowie US 6 393 609 A zeigen beispielsweise ein universell verwendbares Seitenschutzteile für Brillen, welches über ein zentrales, am Brillengestell angreifendes Klemmelement an einem herkömmlichen Brillengestell angesteckt werden kann und dieses übergreifend Seitenschutzteile trägt. Alternativ werden die Seitenschutzteile einfach seitlich auf den Brillenrahmen aufgesteckt.

Aus der Druckschrift WO 01/51983 A1, US 5,438,706 sowie US 5,543,864 der sind jeweils lösbar an Brillengehäusen einsetzbare seitliche Seitenschutzteile offenbart. Hierfür sind in abweichender Ausgestaltung Steckmechanismen vorgesehen, mit denen die Seitenschutzteile an den Brillenbügeln lösbar zu befestigen sind.

Aus den Veröffentlichungen WO 2010/055732 A1 und US 1 323 805 A sind Schutzvorrichtungen bekannt, die an der Innenseite von Brillenrahmen an den Rückseiten der Linsen anbringbar sind. Diese sollen an herkömmlichen Brillengestellen zum Schutz beispielsweise gegen Staub angeordnet werden, wobei der Augenbereich durch diese Schutzvorrichtungen vollständig umschlossen wird. Diese sind hierbei durch Klemmverbindungen lösbar mit dem Brillenrahmen verbunden.

Die deutsche Gebrauchsmuster-Veröffentlichung DE 19 97 504 U zeigt zwar eine rahmenlose Konstruktion, allerdings handelt es sich hierbei nicht um eine Schutzbrille sondern um einen Vorhänger für Brillen, der Seitenschutzteile aufweist. Es handelt sich somit um eine Überdeckung einer herkömmlichen Brille, wodurch deutliche Defizite bei der Anwendung entstehen was den Tragekomfort, die Reinigung und somit die Sicht anbetrifft. Die verwendeten Gläser sind reine Schutzgläser und keine Korrekturlinsen.

Schließlich ist aus der Vorschrift US 5,379,463 eine Schutzbrillenkonstruktion bekannt, die aus verschiedenen miteinander verbindenbaren baulichen Elementen zusammengesetzt ist. Hierbei ist ein flächiger Augen- und Gesichtsschutz für das frontale Abdecken des Gesichtsfelds offenbart, der einteilig ausgebildet ist und bereits eine Aussparung für den Nasenrücken aufweist. Dieser wird durch einen oberseitigen, dieses Bauelemente überspannenden Bügel gehalten, der wiederum die Verbindung zu den seitlichen Flügeln darstellt, die ihrerseits bereits die Seitenschutzteile tragen.

Aufgabe der vorliegenden Erfindung vor diesem technischen Hintergrund ist es, eine Schutzbrille, insbesondere einer Arbeitsschutzbrille oder eine Sportschutzbrille, gemäß dem Oberbegriff des Anspruchs 1 zu schaffen, die sowohl korrigierende Brillengläser umfasst als auch Seitenschutzteile, hierbei aber rahmenlos konstruiert ist, wobei eine besonders leichte Bauweise angestrebt wird.

Erreicht wird dies nach der Erfindung durch eine Schutzbrille, insbesondere einer Arbeitsschutzbrille oder eine Sportschutzbrille, gemäß den kennzeichnenden Merkmalen des Anspruchs 1.

Die Unteransprüche haben vorteilhafte Ausgestaltungen der Erfindung zum Gegenstand.

Die grundsätzliche Idee bei der Gestaltung der erfindungsgemäßen Schutzbrille ist es, dass die Brille ohne einen umfassenden Rahmen aus Kunststoff oder Metall auskommt. Hierfür sind die korrigierenden Brillengläser aus Kunststoff gefertigt und für eine rahmenlose Brille geeignet. Die Brillengläser können hierbei als zusammenhängender Körper bereits ausgebildet sein oder alternativ nasal durch eine Brücke verbunden werden, die mit den Brillengläsern verschraubt, verklebt oder verschweißt ist.

Im Gegensatz zu den aufgezeigten Lösungen im Stand der Technik ist nun jeweils ein Seitenschutzteil temporal mit den Brillengläsern verbunden, wobei die Seitenschutzteile ebenfalls aus speziell geformtem, transparentem Kunststoff bestehen und mit den Brillengläsern randständig verschraubt, verklebt oder verschweißt sind. Hierbei ist ein zentraler Aspekt der Erfindung, dass die aneinander anliegenden, anstoßenden oder aufliegenden Bereiche zwischen Brillenglas und Seitenschutzteil derart gestaltet sind, dass die Kurvenverläufe der Brillengläser von den Seitenschutzteilen aufgenommen werden, so dass eine passgenaue und gegebenenfalls fugenfreie Verbindung hergestellt werden kann.

Zur Anordnung von Brillenbügeln zur Befestigung der Brille am Kopf des Brillenträgers bestehen mehrere Optionen. Die Brillenbügel können entweder an den korrigierenden Linsen oder an den Seitenschutzteilen befestigt sein oder alternativ über das entsprechende Befestigungsgelenk sowohl am Brillenglas als auch am Seitenschutzteil, wobei als Befestigung eine Verschraubung, ein Verklebung oder ein Verschweißen vorgesehen ist. Hierbei kann ein Gelenksscharnier für den Bügel vorgesehen sein. Das Scharnierteil für den Brillenbügel kann hierbei außen anliegend oder innenseitig am Seitenschutzteil angeordnet sein.

Eine Verschraubung des Scharnierelementes kann zweckmäßigerweise auch lediglich am Seitenschutzteile erfolgen.

Es kann allerdings alternativ auch eine Bohrung angeordnet sein für eine Verschraubung, die sowohl im Seitenschutzteil als auch im Brillenglas in einem Überlappungsbereich verläuft.

Das Scharnier zur Anordnung eines Brillenbügels kann alternativ ebenfalls bereits konstruktives Bauteil des Seitenschutzteils sein.

Eine passgenauen Fertigung kann dadurch unterstützt werden, dass eine entsprechende Stufe in das Material des Seitenschutz Teils derart eingeformt ist, dass diese Stufe in Ihrem Verlauf und in ihrer Formgebung die Außenkontur und Wölbung des von dieser Vertiefung aufzunehmenden Randbereichs des Brillenglases passgenau wiedergibt. Dies hat Vorteile bei der Fertigung der Schutzbrille, da die Positionierung von Seitenschutzteil zu Brillenglas hierdurch vereinfacht wird.

Eine weitere vorteilhafte Weiterentwicklung besteht darin, dass die seitlichen Schutzteile identisch ausgebildet für beide Seiten verwendet werden können. Der Vorteil ist, dass diese nun beliebig links wie rechts verbaut werden können und zudem mit einem Werkzeug produziert werden können, was eine deutliche Kostenersparnis bedeutet. Hierfür ist eine spezielle Formung der Korrekturlinsen sowie der seitlichen Schutzteile in deren Verbindungsbereichen vorgesehen, so dass die Korrekturlinsen links wie rechts mit dem gleich ausgebildeten seitlichen Schutzteil verbindbar sind, dass an beiden Seiten an den Korrekturlinsen angesetzt werden kann.

Nachfolgend wird eine vorteilhafte Bauform der erfindungsgemäßen Schutzbrille anhand zweier Zeichnungen näher erläutert. Es zeigen
- Figur 1: die erfindungsgemäße Schutzbrille 1 in frontaler Ansicht mit eingeklappten Brillenbügeln 5 und
- Figur 2: die erfindungsgemäße Schutzbrille 1 in perspektivischer Seitenansicht auf das Seitenschutzteil 3 mit ausgeklappten Brillenbügeln 5.

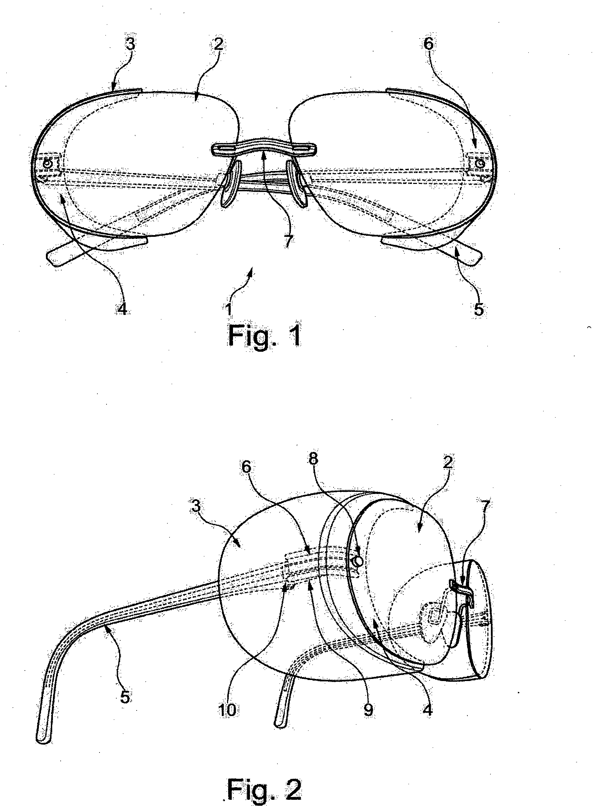

In Figur 1 ist in der frontalen Ansicht eine Ausgestaltung der Erfindung dargestellt, die aus 2 Korrekturlinsen 2 als Brillengläsern besteht, die durch eine mittig angeordnete Nasenbrücke 7 miteinander verbunden sind. Hierbei erfolgt die Befestigung der Nasenbrücke 7 direkt in die Kunststoffgläser der Korrekturlinsen 2.

Es ist hierbei die Verbindung zwischen den Korrekturlinsen 2 und dem seitlichen Schutzteil 3 als gestrichelte Linie dargestellt. Hierbei folgt der Verbindungsbereich zwischen Korrekturlinse 2 und seitlichem Schutzteil 3 der Außenkontur der Korrekturlinse 2. Auf diese Weise können das seitliche Schutzteil 3 und das Brillenglas 2 in einem Überlappungsbereich 4 plan aufeinander aufliegen, was die Stabilität der Verbindung zwischen Korrekturlinse 2 und seitlichem Schutzteil 3 wesentlich verbessert.

In der vorliegenden Bauform findet eine Verschraubungen dieser beiden Bauteile durch eine Befestigungsschraube 8 statt, die im Überlappungsbereich 4 zwischen Korrekturlinse 2 und Schutzteil 3 verläuft. In der vorliegenden Bauform erfolgt diese Verschraubung zusätzlich in das den Brillenbügel 5 tragende Scharnierteil 6 hinein.

Dies wird insbesondere in Figur 2 nochmals verdeutlicht. Ein in etwa 1-förmiger Scharnierkörper 6 verläuft vom Überlappungsbereich 4 von Korrekturlinse 2 und Schutzteil 3 der Kontur des Schutzteils 3 folgend bis etwa in den mittleren Bereich des seitlichen Schutzteils 3. In der vorliegenden Bauform ist der Scharnierkörper 6 zum einen frontal durch die Befestigungsschraube 8 mit den Bauteilen Korrekturlinse 2 und Schutzteil 3 verbunden. Zudem ist eine zusätzliche Verklebung oder Verschweißung mit diesen Bauteilen zweckmäßig.

In der vorliegenden Bauform sind zudem ober- und unterhalb des seitlichen Schutzteils 3 Führungsleisten 9 innenseitig am seitlichen Schutzteil 3 dergestalt angeordnet, dass diese Führungsleisten 9 der Ausrichtung und Anordnung des Scharnierkörpers 6 dienen. Hierdurch wird zum einen die Positionierung des Scharnierkörpers 6 am seitlichen Schutzteil 3 unterstützt, wie auch die Stabilität der Befestigung des Scharnierkörpers 6. Endständig weist der Scharnierkörpers 6 die Gelenkverbindung 10 zum Brillenbügel 5 auf.

Hierdurch entsteht eine vorteilhafte Schutzbrille 1, die ohne Brillenrahmen als selbsttragender Körper ausgebildet ist, wobei die elementaren Bauelemente der Brillengläser 2, der Seitenschutzteile 3 wie auch der Brillenbügel 5 miteinander fest verbunden sind.

### Bezugszeichenliste

- 1: Schutzbrille
- 2: Korrekturlinse
- 3: seitliches Schutzteil
- 4: Überlappungsbereich Korrekturlinse Schutzteil
- 5: Bügel
- 6: Scharnierkörper
- 7: Nasenbügel
- 8: Befestigungsschraube
- 9: Führungsleisten
- 10: Gelenkverbindung

## Patentansprüche

1. Schutzbrille, insbesondere Arbeitsschutzbrille oder Sportschutzbrille, mit korrigierenden Brillenschutzgläsern zum Ausgleich von Fehlsichtigkeit umfassend seitliche Schutzteile 3 sowie Brillenbügel 5,
**dadurch gekennzeichnet, dass**
- die Schutzbrille (1) als rahmenlose Brille ausgebildet ist
- und die Korrekturlinsen (2) als Kunststoffgläser ausgebildet sind, die fest mit temporal ansetzenden Seitenschutzteilen (3) verbunden sind,
- wobei die Seitenschutzteile (3) im Verbindungbereich zu den Korrekturlinsen (2) an diese passgenau angeformt sind, so dass der Kurvenverlauf der Korrekturlinsen von den Seitenschutzteilen (3) im Verbindungbereich abgebildet ist und
- die Korrekturlinsen (2) in einem Überlappungsbereich (4) flächig auf den angepasst geformten seitlichen Schutzteilen (3) aufliegen und in diesem Verbindungsbereich mit den Seitenschutzteilen (3) verklebten und/oder verschweißt und/oder verschraubt sind.

2. Schutzbrille nach Anspruch 1,
**dadurch gekennzeichnet, dass**
die Korrekturlinsen (2) im nasalen Bereich durch eine Nasenbrücke (7) verbunden sind, die fest mit dem Kunststoffgläsern verklebt und/oder verschweißt und/oder verschraubt ist.

3. Schutzbrille nach einem der vorangegangenen Ansprüche,
**dadurch gekennzeichnet, dass**
ein Scharnierelement (6) innenseitig oder außenseitig am seitlichen Schutzteil (3) angeordnet und mit diesem verschweißt und/oder verklebt und/oder verschraubt ist.

4. Schutzbrille nach einem der vorangegangenen Ansprüche,
**dadurch gekennzeichnet, dass**
zumindest im seitlichen Schutzteil (3) zumindest eine Führungsleiste (9) angeordnet ist, an der das Scharnierelement (6) anliegt.

5. Schutzbrille nach Anspruch 4,
**dadurch gekennzeichnet, dass**
das Scharnierelement (6) zwischen 2 Führungleisten (9) geführt innenseitig am Seitenschutzteil (3) angeordnet und mit diesem verklebt und/oder verschweißt und/oder verschraubt ist.

6. Schutzbrille nach einem der vorangegangenen Ansprüche,
**dadurch gekennzeichnet, dass**
zumindest eine Bohrung im Verbindungsbereich von Korrekturlinse (2) und Seitenschutzteil (3) verläuft, mit der die Bauteile der Korrekturlinse (2), des seitlichen Schutzteils (3) und des Scharnierelements (6) miteinander durch eine Befestigungsschraube (8) verbunden sind.

7. Schutzbrille nach einem der vorangegangenen Ansprüche, **dadurch gekennzeichnet, dass**
das seitliche Schutzteil (3) und/oder die Korrekturlinse . (2) im Überlappungsbereich (4) eine Abstufung aufweisen, die eine passgenauer Verbindung dieser Bauteile im diesem Verbindungsbereich bewirkt.

8. Schutzbrille nach einem der vorangegangenen Ansprüche,
**dadurch gekennzeichnet, dass**
ein Scharnierelement (6) oder eine Gelenksverbindung (10) konstruktiver Bestandteil des seitlichen Schutzteil (3) ist.

9. Schutzbrille nach einem der vorangegangenen Ansprüche,
**dadurch gekennzeichnet, dass**
das seitliche Schutzteil (3) sowie die Korrekturlinsen (2) in ihren seitlichen Verbindungsbereichen derart ausgebildet sind, dass das seitliche Schutzteil (3) in nur einer Bauform an beiden Korrekturlinsen (2) seitlich ansetzbar ist und somit beide seitlichen Schutzteile (3) identisch ausgebildet sind.

## Claims

1. Safety eyeglasses, in particular safety eyeglasses for work or safety eyeglasses for sport, with corrective eyeglass safety lenses for correcting ametropia, comprising lateral protection parts (3) and arms (5),
**characterized in that**
- the safety eyeglasses (1) are configured as frameless eyeglasses,
- and the corrective lenses (2) are configured as plastic lenses which are fixedly connected to lateral protection parts (3) adjoining them at the temples,
- wherein the lateral protection parts (3), in the connection region to the corrective lenses (2), are moulded to the latter with an exact fit, such that the curved profile of the corrective lenses is mirrored by the lateral protection parts (3) in the connection region, and
- the corrective lenses (2), in an overlap region (4), lie flat on the correspondingly formed lateral protection parts (3) and, in this connection region, are adhesively bonded and/or welded and/or screwed to the lateral protection parts (3).

2. Safety eyeglasses according to Claim 1,
**characterized in that**
the corrective lenses (2) are connected, in the nasal region, by a nose bridge (7) which is adhesively bonded and/or welded and/or screwed fixedly to the plastic lenses.

3. Safety eyeglasses according to either of the preceding claims,
**characterized in that**
a hinge element (6) is arranged internally or externally on the lateral protection part (3) and is welded and/or adhesively bonded and/or screwed to the latter.

4. Safety eyeglasses according to one of the preceding claims,
**characterized in that**
at least one guide strip (9), on which the hinge element (6) bears, is arranged at least in the lateral protection part (3).

5. Safety eyeglasses according to Claim 4,
**characterized in that**
the hinge element (6), guided between two guide strips (9), is arranged internally on the lateral protection part (3) and is adhesively bonded and/or welded and/or screwed to the latter.

6. Safety eyeglasses according to one of the preceding claims,
**characterized in that**
at least one bore runs in the connection region of corrective lens (2) and lateral protection part (3), by way of which bore the components in the form of the corrective lens (2), the lateral protection part (3) and the hinge element (6) are connected to each other by a fastening screw (8).

7. Safety eyeglasses according to one of the preceding claims,
**characterized in that**
the lateral protection part (3) and/or the corrective lens (2) have/has, in the overlap region (4), a graduation which allows these components to be connected with an exact fit in this connection region.

8. Safety eyeglasses according to one of the preceding claims,
**characterized in that**
a hinge element (6) or an articulated connection (10) is a structural component part of the lateral protection part (3).

9. Safety eyeglasses according to one of the preceding claims,
**characterized in that**
the lateral protection part (3) and the corrective lenses (2), in the lateral connection regions thereof, are configured in such a way that the lateral protection part (3) can be laterally attached in only one design to both corrective lenses (2), and both lateral protection parts (3) are therefore identically configured.

## Revendications

1. Lunettes de protection, en particulier lunettes de protection de travail ou lunettes de protection de sport, présentant des verres correcteurs de lunettes de protection permettant de compenser les défauts visuels et comprenant des pièces latérales de protection (3) ainsi que des branches de lunettes (5),
**caractérisées en ce que**
les lunettes de protection (1) sont configurées comme lunettes sans monture,
**en ce que** les lentilles correctrices (2) sont réalisées en verre synthétique et sont reliées solidairement à des pièces latérales de protection (3) placées sur les tempes,
**en ce que** les pièces latérales de protection (3) épousent étroitement les lentilles correctrices (2) dans la partie de liaison de telle sorte que dans la partie de liaison, la courbe des lentilles de protection soit formée par les pièces latérales de protection (3) et
**en ce que** dans une partie de superposition (4), les lentilles correctrices (2) reposent à plat sur les pièces latérales de protection (3) de forme adaptée et sont collées, soudées et/ou vissées sur les pièces latérales de protection (3) dans cette partie de liaison.

2. Lunettes de protection selon la revendication 1, **caractérisées en ce que** les lentilles correctrices (2) sont reliées au niveau du nez par un pont nasal (7) qui est collé, soudé et/ou vissé solidairement aux verres en matière synthétique.

3. Lunettes de protection selon l'une des revendications précédentes, **caractérisées en ce qu'**un élément de charnière (6) est disposé du côté intérieur ou du côté extérieur de la pièce latérale de protection (3) et est soudé, collé et/ou vissé sur cette dernière.

4. Lunettes de protection selon l'une des revendications précédentes, **caractérisées en ce qu'**au moins dans la pièce latérale de protection (3) est disposée au moins une languette de guidage (9) sur laquelle repose l'élément de charnière (6).

5. Lunettes de protection selon la revendication 4, **caractérisées en ce que** l'élément de charnière (6) est guidé entre deux languettes de guidage (9) sur le côté intérieur de la pièce latérale de protection (3) et est soudé, collé et/ou vissé sur cette dernière.

6. Lunettes de protection selon l'une des revendications précédentes, **caractérisées en ce qu'**au moins un alésage s'étend dans la partie de liaison entre la lentille correctrice (2) et la pièce latérale de protection (3), par lequel les composants de la lentille correctrice (2), de la pièce latérale de protection (3) et de l'élément de charnière (6) sont reliés les uns aux autres par une pièce de fixation (8) .

7. Lunettes de protection selon l'une des revendications précédentes, **caractérisées en ce que** la pièce latérale de protection (3) et/ou la lentille correctrice (2) présentent dans la partie de superposition (4) un gradin qui a pour effet une liaison bien ajustée de ces composants dans cette partie de liaison.

8. Lunettes de protection selon l'une des revendications précédentes, **caractérisées en ce qu'**un élément de charnière (6) et/ou une liaison articulée (10) fait partie intégrante de la pièce latérale de protection (3).

9. Lunettes de protection selon l'une des revendications précédentes, **caractérisées en ce que** la pièce latérale de protection (3) ainsi que les lentilles correctrices (2) sont configurées dans leurs parties latérales de liaison de telle sorte que la pièce latérale de protection (3) ne puisse être placée latéralement sur les deux lentilles correctrices (2) que dans une forme et qu'ainsi les deux pièces latérales de protection (3) ont la même configuration.
